# EUROPEAN PATENT APPLICATION

(11) **EP 1 595 773 A2**
(43) Date of publication of application: **16.11.2005**
(21) Application number: 05009585.0
(22) Date of filing: 02.05.2005
(51) Int. Cl.: B62D 53/06

(54) **Transport vehicle trailer chassis**

(30) Priority: 12.05.2004 ES 200401135 U
(71) Applicant: Miro Bravo, Vicente, 03801 Alcoy (Alicante) (ES)
(72) Inventor: Miro Bravo, Vicente, 03801 Alcoy (Alicante) (ES)
(74) Representative: Isern-Jara, Nuria

(57) **Abstract**

TRANSPORT VEHICLE TRAILER CHASSIS that is made from multiple longitudinal beams (1) and transversal cross beams (2) that include multiple wheels (10), said chassis being divided up into two sections (4 & 5), the first section (4) corresponding to the front part of the chassis that is next to the vehicle tractor unit and the second section (5) corresponding to the rear part of the chassis that bears a load container (3), characterised in that the first section (4) is made with a single plate section (6) of less thickness than the thickness of the second section (5) of the chassis, in addition including a coupling device (7) in order to couple up to the tractor vehicle.

## Description

The object of the present Invention is for the registration of a transport vehicle trailer chassis that incorporates noticeable innovations and advantages compared to the present chassis.

More specifically the invention deals with a chassis being of the type that has multiple longitudinal beams and transversal cross bars and also includes multiple wheels, said chassis being divided up into two sections, the first section corresponds to the front part of the chassis which is next to the vehicle tractor unit and a second section corresponding to the rear part of the chassis which supports the greater part of the load container.

### BACKGROUND TO THE INVENTION

At the present time it is well known that the chassis for articulated trailer transport vehicles onto which a container is placed, for example, the refrigerated type, are basically made up of a metallic structure formed by multiple welded longitudinal beams that make the length of the trailer and multiple transversal reinforcing cross bars welded or bolted to the longitudinal beams. The structure that makes up said trailers can be divided into two sections. The first section corresponds to the front part of the chassis that is next to the tractor unit and a second section corresponding to the rear part of the chassis which supports a large part of the container load, such as the trailer platforms that are described in the Utility Model N° ES 1014923 and the application EP 0439409.

However, the main disadvantage of the chassis currently being manufactured is that the first section has an excessive structure, in such a way that it increases the height of the chassis and the useful working height of the truck is lost, in addition to increasing the tare weight of the vehicle. In addition, another disadvantage is the fact that the present chassis sometimes have transversal cross beams or protruding parts that force the container that must be placed on top to have through holes or openings that bring about a reduction in the internal capacity of the container and the thermal insulation, as and how occurs in the Spanish invention patent N° 0340173.

### DESCRIPTION OF THE INVENTION

This present invention has been developed for the purpose of providing a transport vehicle trailer chassis that solves the above mentioned disadvantages, in addition to contributing additional advantages that will be clear from the description that is included below.

The transport vehicle trailer chassis of the present invention is of the type that has multiple longitudinal beams and transversal cross bars and also includes multiple wheels, said chassis being divided up into two sections, the first section corresponds to the front part of the chassis which is next to the vehicle tractor unit and a second section corresponding to the rear part of the chassis which supports a large part of the container load, and it is characterised by the fact that the first section is made up from a unique plate section with a thickness that is less than thickness of the second section, in addition to including a "king-pin" coupling device to connect to the vehicle tractor unit.

Thanks to these characteristics, an advantageous reduction in the height of the trailer chassis is obtained at low manufacturing cost allowing a greater useful height of the vehicle to be obtained, at the same time as reducing the tare weight and giving the vehicle greater lightness which will reduce the fuel consumption. In addition, the load container to be placed on top can have a completely flat base without having to have any predetermined modification or adaptation which is different from the state of the previous techniques, in such a way that the internal volume of the load container is maximised.

In accordance with another aspect of the invention, the stated plate section is made up of multiple through holes, arranged by preference in a regular fashion. In this way the weight of the chassis is lightened even more.

Other characteristics and advantages of the transport vehicle trailer chassis will be clear from the description of a preferred embodiment of the invention and the drawings that are attached, but are not exclusive, which are by way of illustration and not by way of limitation, in which:

### BRIEF DESCRIPTION OF THE DRAWINGS

Figure 1.- Is a side elevation of the trailer chassis of the present invention.
Figure 2.- Is a plan view of the chassis represented in the above figure; and
Figure 3.- Is a side elevation of an example that shows a trailer with the above chassis onto which a container has been placed.

### DESCRIPTION OF A PREFERRED EMBODIMENT

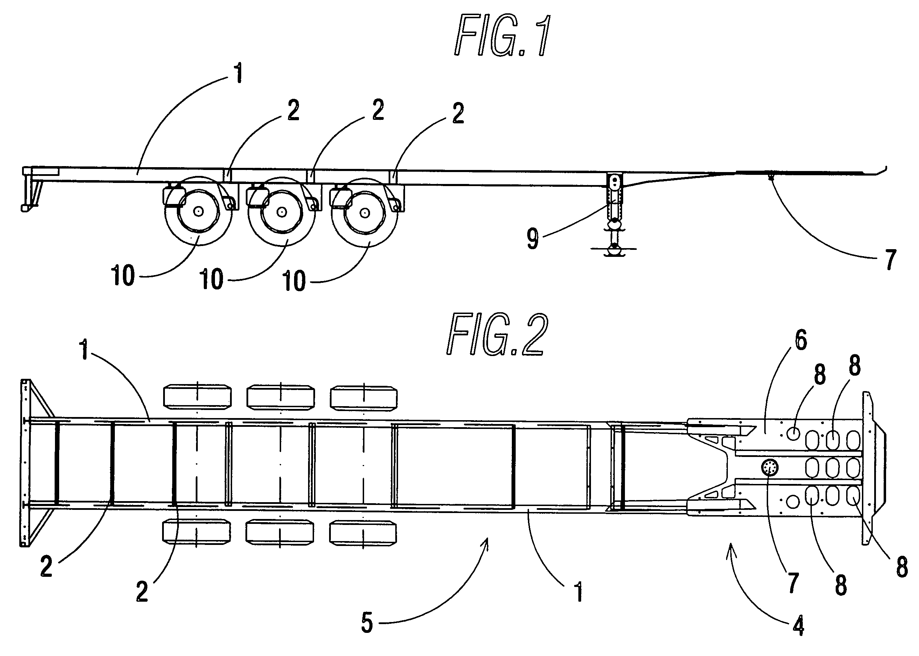

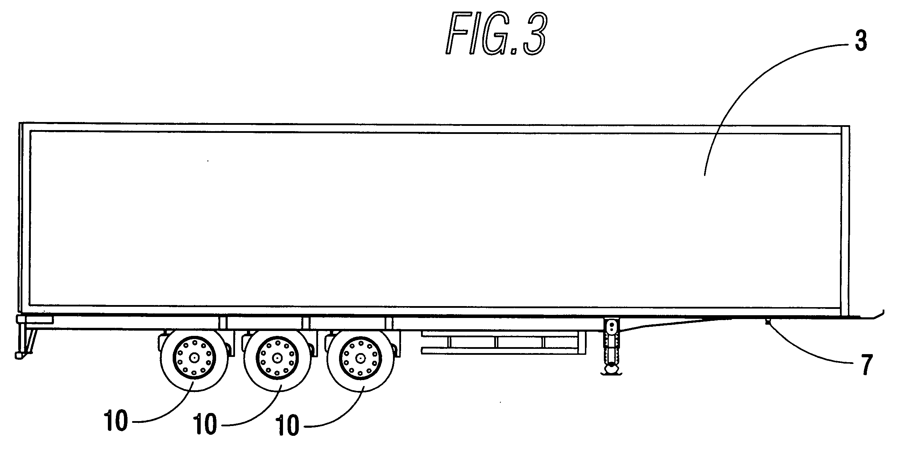

As shown in figures 1 and 2, the trailer chassis of the present invention is made up of multiple longitudinal beams (1) and reinforcing transversal cross beams (2) which set out the length and width of the chassis onto which a conventional container (3) can be placed (see figure 3) for the transport of goods. Basically, said chassis can be divided up into two sections (4) and (5), the first section (4) corresponding to the front part of the chassis that is next to the vehicle tractor unit and a second section (5) corresponding to the rear of the chassis that supports a great part of the load of the container (3) and has multiple wheels (10) for its movement.

Said first section (4) is made up of a single metallic plate section (6) having a noticeably rectangular shape of lesser thickness than the thickness of the second section (5), in addition to having a "king-pin" coupling device (7) in order to connect to the tractor unit. The plate section (6) is constructed with multiple through holes (8) arranged in a matrix pattern and multiple geometric shapes, such as noticeably rectangular, which are not by way of limitation in any circumstances.

The second section (5) of the chassis here described includes, as shown, has some metallic support feet (9), two positions having been represented in figure 1, one of these corresponds to the position of the trailer at rest and the other position when the trailer is being towed by the vehicle tractor unit (not shown).

The details, shapes, sizes and other accessorial elements, likewise the materials used in the manufacture of the transport vehicle trailer chassis of the invention can be suitably substituted for others that are technically equivalent and do not diverge from the essential characteristics of the invention or the scope defined in the claims that will be included below.

## Claims

1. Transport vehicle trailer chassis, in particular for articulated trailers that are made from multiple longitudinal beams (1) and transversal cross beams (2) that include a multiple wheels (10), said chassis being divided up into two sections (4 & 5), the first section (4) corresponding to the front part of the chassis that is next to the vehicle tractor unit and the second section (5) corresponding to the rear part of the chassis that bears a the greater part of the container load (3), **characterised in that** the first section (4) is made with a single plate section (6) of less thickness than the thickness of the second section (5) of the chassis, in addition including a coupling device (7) in order to couple up to the tractor unit.

2. Transport vehicle trailer chassis according to claim 1, **characterised in that** the plate section (6) has multiple through holes (8).
